Europäisches Patentamt

European Patent Office

Office européen des brevets

(11) Publication number: **0 304 295**
**A1**

## EUROPEAN PATENT APPLICATION

(21) Application number: **88307642.4**

(22) Date of filing: **18.08.88**

(51) Int. Cl.⁴: **G 01 N 27/26**
**G 01 N 30/54**

(30) Priority: **19.08.87 US 87062**

(43) Date of publication of application:
**22.02.89 Bulletin 89/08**

(84) Designated Contracting States: **CH DE GB LI SE**

(71) Applicant: **THE BOARD OF TRUSTEES OF THE LELAND STANFORD JUNIOR UNIVERSITY**
**Stanford, CA 94305 (US)**

(72) Inventor: **Zare, Richard N.**
**724 Santa Ynez**
**Stanford California 94035 (US)**

**Gozel, Philippe**
**745 South Bernardo Avenue No. 322A**
**Sunnyvale California 94087 (US)**

(74) Representative: **Harrison, David Christopher et al**
**MEWBURN ELLIS & CO 2/3 Cursitor Street**
**London EC4A 1BQ (GB)**

(54) Electrokinetic analysis method and apparatus employing heat removal.

(57) A method and apparatus carry out electrokinetic separations with improved efficiency by removing heat from the electrokinetic separation zone. A capillary column (30) is surrounded by a jacket (61) in which coolant water (60) is circulated.

FIG. 2

EP 0 304 295 A1

**Description**

## ELECTROKINETIC ANALYSIS METHOD AND APPARATUS EMPLOYING HEAT REMOVAL

This invention relates to the field of electrokinetic separation. More particularly, it concerns an improved process and apparatus for carrying out electrokinetic separation in double open-ended tubular separation zones such as capillaries.

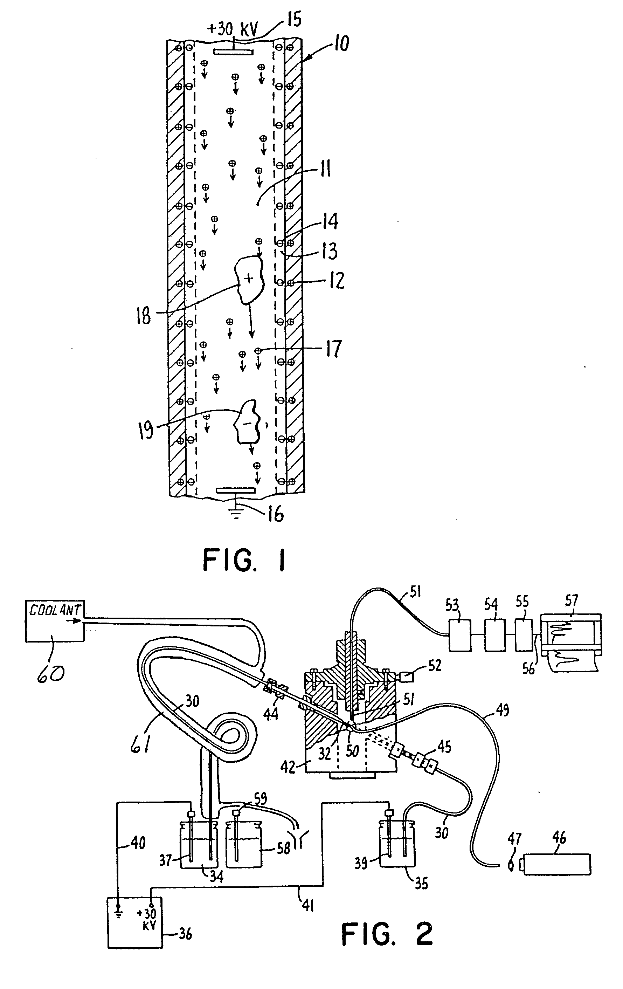

In 1974, Pretorius et al. (J. Chromatogr., 1974, 99, 23-30) described the concept of using electroosmosis to pump solvents in capillary columns, which they stated to be the flow of a liquid in contact with a solid surface under the influence of a tangentially applied electrical field. This transport process can be visualized with reference to Figure 1. In Figure 1, a small-bore double open-ended tube 10 is shown in cutaway cross-section. The tube is filled with a conductive liquid 11 sometimes referred to herein as a "support electrolyte". The wall of tube 10 is shown with preferentially bound positive ions 12. (Depending upon the material of tube 10, this bound charge could be negative, instead.) Positive ions 12 attract anions 13 from conductive liquid 11 and set up an electric double layer 13. This preferential attraction of anions to the wall results in a net excess positive charge in the body of liquid 11. Thus, when an electric potential is applied, such as a 30 kV potential between electrodes 15 and 16, located at the ends of the column of liquid 11 contained within tube 10, the positively charged liquid moves toward the cathode. Species in the liquid can be separated from one another by this movement. Cationic species 18 is electrophoretically drawn toward cathode 16. Anionic species 19 is electrophoretically repelled by cathode 16. As is shown in Figure 1, and as is usually the case, the velocity of the liquid 11 is larger than the electrophoretic velocities of the species in solution such that all the species can be seen to move in the direction of the electroosmotic flow but at differing rates. The combination of electroosmotic flow and electrophoretic movement is referred to in the literature and herein as electrokinetic movement, and a separation which relies upon these two effects is referred to as an electrokinetic separation.

In 1979, Mikkers, et al. (Mikkers, F.E.P., Everaerts, F.M., and Verheggen, Th.P.E.M. J. Chromatogr.,169, 11) described the use of narrow-bore (e.g., 0.2-0.35 mm I.D.) tubes for zone electrophoresis. More recently, J.W. Jorgenson and K.D. Lukacs have reported (J. Chromatogr., 1981, 218, 209; Anal. Chem., 1981, 53, 1298; and Science, 1983, 222, 266) the use of 0.075 mm I.D. glass capillaries to carry out such separations. Tsuda et al. reported similar work in J. Chromatog., 1982, 248, 241, and J. Chromatog., 1983, 264, 385 and in these studies demonstrated an electrokinetic separation process in which the column was heated to 35-40° C to solubilize analyte species. Earlier this year, coinventor Richard Zare and coworkers were issued U.S. Patent 4,675,300 on an electrokinetic separation process using a laser fluorescence detector.

This prior work has not been without its problems, some of which are inherent in the process. For one, the sensitivity of detection possible with the method is directly related to the number of molecules of the detected species moving past a detection point on the column. This, in turn, is directly related to the volume of fluid passed through the column. The volume of fluid can be increased by increasing the diameter of the column and also by increasing the voltage and current applied to drive the liquid through the column.

While both of these changes to increase sensitivity are in theory favorable, in practice they can produce disturbances which destroy the effectiveness of the process.

We (as well as others) have traced these disturbances to Joule heating effects. As column diameter is increased, heat which is generated along the length of the column and throughout the cross-section of the contained liquid increases as the second power of the diameter. Heat dissipation, being a function of the surface area of the column, increases as the first power of the diameter. Thus, with increasing diameter, the column and its contents heat up, all other conditions remaining constant. Similarly, as electrical voltage and current are increased, heat build-up can become a problem.

The presence of heat has several adverse effects. For one, it alters the reproducibility from sample to sample of analytical methodologies employing electrokinetic separation. Also importantly, for a given sample, the presence of heat can give rise to radial thermal gradients in density in the fluid and to convection currents and eddies in the fluid which disrupt its plug flow characteristics. The electrolyte thins when heated and hot spots are promoted. These disruptions "spread" and mix materials during electrokinetic transport, and this can reduce the resolution as well as the reproducibility and sensitivity of the separations being carried out.

Under extreme conditions, localized boiling can occur which catastrophically disrupts the flow and can even break the electrical conductivity of the column contents. These disturbances are all deviations from plug flow which is the ideal condition in this type of system.

### STATEMENT OF THE INVENTION

An improvement in electrokinetic separation has now been found. Pursuant to this improvement, electrokinetic transport is conducted in a double open ended capillary under conditions of forced heat removal from the capillary. This heat removal permits larger diameter capillaries to be used with higher voltages and currents and gives rise to increased sensitivity, resolution and reproducibility as compared to prior art systems.

Thus, in one aspect, this invention provides an electrokinetic separation column comprising a capillary made of a thermally transmissive dielectric material enclosing a continuous column of electrically conductive fluid, said capillary being contacted directly or indirectly over a substantial fraction of its operative length with a moving heat-absorptive fluid, said fluid being maintained at a lower temperature than the inherent operating temperature of the column.

In another aspect this invention provides the improvement in electrokinetic separation processes wherein the process is conducted while actively removing heat from the electrokinetic capillary.

In preferred embodiments, the cooling is carried out by holding the capillary at a constant cooled temperature, over a substantial fraction of its operative length and during the entire period that the electrokinetic separation is carried out.

In preferred embodiments the capillary is coiled or looped in the cooled region to give a simplified coolant flow.

## DETAILED DESCRIPTION OF THE INVENTION

### Brief Description of the Drawing

This invention will be further described with reference being made to the accompanying drawing wherein

Figure 1 is an axial cross-sectional view of a liquid-filled tube illustrating the process of electrokinetic separation as described herein in the Background section.

Figure 2 is a partially schematic and partially cross-sectional view of an electrokinetic separation apparatus in accord with this invention.

Figures 3 and 4 are partially cross-sectional views of two alternative embodiments of the cooled capillaries of this invention.

Figure 5 is a series of chemical formulas that relate to one typical application of the present invention. The formulas set forth the formation of 2,4-diaminopteridine-6-carboxylic acid, a highly fluorescent compound which is easily detectable and can be used in the analysis of the important drug methotrexate (MTX). This analysis using the improvement of this invention is set forth in the examples.

Figure 6 is a column electropherogram of MTX, using the present invention.

Figure 7 is a column electropherogram of MTX and its major metabolite, 7-hydroxymethotrexate (7-OHMTX), using the present invention.

Figure 8 is a column electropherogram of a clinical sample from a patient undergoing high-dose MTX therapy. The experimental conditions are the same as in Figure 7.

Figure 9 is a comparison of MTX concentrations obtained by capillary zone electrophoresis with laser induced fluorescence detection (CZE-LIF), and an enzyme multiplied immunoassay technique (EMIT).

### Descrption of Preferred Embodiments

Turning to the figures:

A capillary zone electrophoresis set up employing cooling in accord with this invention is shown in Figure 2. This apparatus includes a laser-induced fluorescence (CZE-LIF) detection system. A 60 cm length (45 cm to detector) of 200 micron I.D. fused silica capillary 30 (Hewlett Packard, Santa Clara, CA) is used as the liquid conduit for the electrokinetic separation. The ends of the capillary are dipped in 4 ml glass vials 34 and 35 which each contain approximately 2 ml of electrolyte-buffer solution. Connection to the high voltage power supply 36 is provided by conductors 40 and 41 which electrically connect to strips of platinum foil 37 and 39 which in turn dip in the same solutions in vials 34 and 35 as the ends of the capillary so as to create a continuous electrical circuit. The current through the capillary is measured as a voltage across a 1000 ohm resistor in the grounded end of the circuit. The capillary is encased in a plexiglass box, which when opened automatically shuts off the high voltage for safety. The capillary is housed in a teflon tubing jacket 61. Water from a temperature-controlled bath 60 is circulated in the jacket 61 allowing for heat removal and thermostated conditions in the column 30. The 325 nm radiation ($\sim$ 17 mW) of a Model 4050B He-Cd laser-46 (Liconix, Sunnyvale, CA) is directed into the capillary (a 1 cm region 32 of the capillary was stripped of a polyimide protective coating which it carried to render it transparent to the UV radiation) using a 200 micron core diameter fused silica fiber 49 (Diaguide, Fort Lee, NJ). Fluorescence is collected at right angles using a 1000 micron core diameter fused silica optical fiber 51 (Math Associates, Westbury, NY). The fluorescence emission from the exit end of the 1000 micron fiber is passed through a monochromator 53 (ISA Model H10) or a $NaNO_2$ saturated solution filter to minimize background radiation and through a 450 nm interference filter 54 (35 nm FWHM bandpass) to maximize fluorescence signal collected. The radiation is then directed onto a Centronix 4249B photomultiplier tube (PMT) 55. The PMT signal is conditioned using a current-to-voltage converter and a low-pass filter (rise time = 100 ms) before being fed into a strip-chart recorder 57.

In this embodiment and generally in accord with this invention the heat removal system is set to hold the temperature within the capillary at between 0°C and 50°C, and preferably between 15°C and 35°C. The jacket covers a substantial proportion of the capillary and in particular essentially all of the column between the first electrode and the detector. (As used herein, the terms "substantial proportion" and "essentially all" when used to refer to a fraction of cooled column are defined to mean that at least about 50%, preferably at least about 75% and especially at least about 85% of that portion of the column which is cooled.) Cooling of the region after the detector is needed only if the column diameter and/or currents and voltages are large enough to bring about boiling in that region. However, if no boiling-caused discontinuities in the conductive path are caused, heating and mixing in that region are generally irrelevant to the accuracy of the analytical results.

The flow of coolant fed to jacket 61 should be large enough to hold the temperature rise within the liquid in the capillary as it passes through the cooled region to less than 5°C and preferably to less than 2°C. It will be appreciated by those skilled in the art that although the heat rise is a very serious problem, this is in part brought on by the small volumes of liquid in the column such that the quantity of heat generated per unit time such as in terms of watts is quite small (such as on the order of one to ten watt) and that modest flows of chilled or thermostated coolant will generally allow even smaller temperature rises to be achieved.

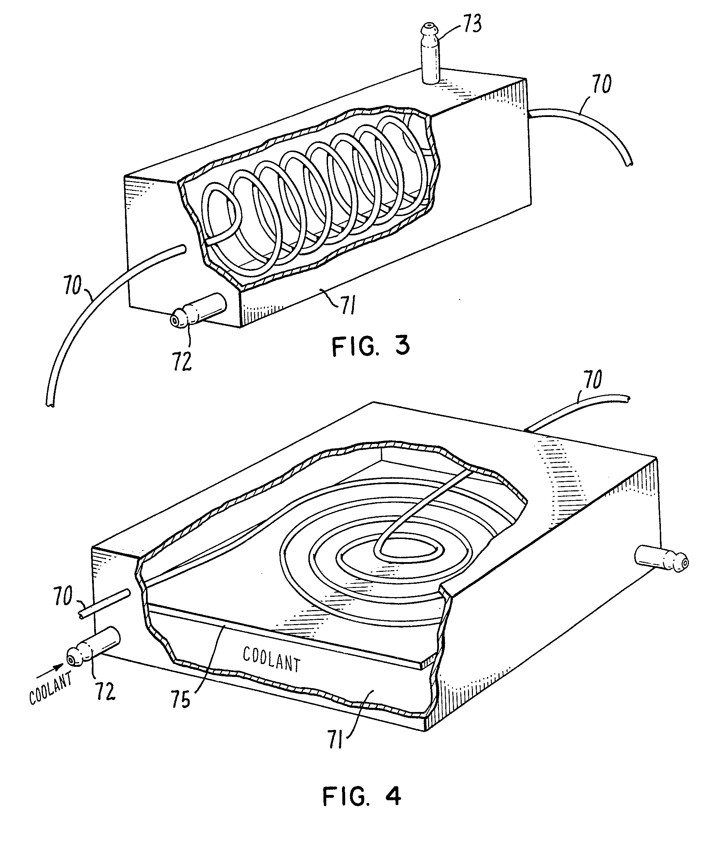

The cooling applied to the capillary can be applied directly or indirectly. The embodiment just described is an example of "direct" application in that the coolant fluid is bought into direct contact with the column. In an alternative direct mode, the capillary can be coiled or looped. This configuration is shown in Figure 3. In Figure 3, the capillary is shown as 70. It is coiled and contained within housing 71. Housing 71 is liquid tight and contains an inlet port 72 and an outlet port 73 through which the coolant fluid can be passed. This configuration offers the practical advantages that all different sizes of column can be accommodated with identical connection points for the column itself and the coolant fluid. In addition, in this configuration the chances for "end to end" temperature rises are essentially completely eliminated.

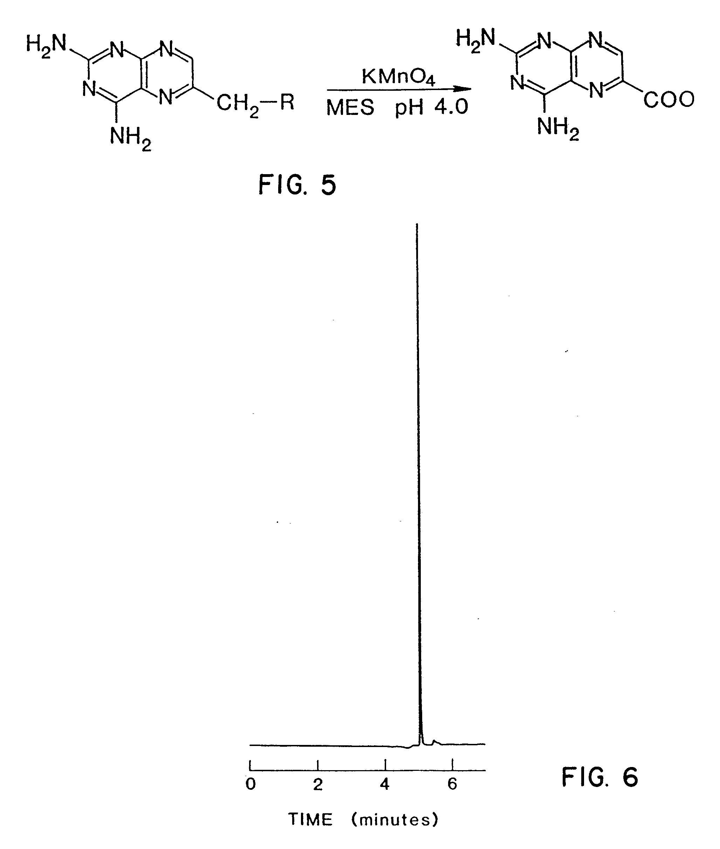

In the "indirect" mode, the column is in intimate thermal contact with a thermally transmissive body which, in turn, is in contact with the flow of cooling fluid. In this case the thermally transmissive body will be in contact with the column for the required substantial portion of its length. Metal blocks and like heat-transmissive structures are effective thermal bodies for this indirect mode of operation. Figure 4 illustrates one embodiment of this configuration. This embodiment is similar to the column shown in Figure 3 with the same parts having the same identification numbers. The embodiment shown in Figure 4 has the additional features that the column is coiled and adhered directly to one side of a metal plate 75. This plate 75 in turn is contacted on its other side by the flow of coolant fluid introduced through inlet port 72 and removed through exit port 73.

The cooling fluid which is used to remove heat from the column can be a liquid or a gas, is desired. In light of the temperature ranges desired and the fact that the support liquid in the column is almost always water-based, chilled or thermostated water is a very convenient coolant. Other materials such as organic liquids including alcohols such as ethylene glycol, isopropanol, methanol and propylene glycol, halohydrocarbons such as the fluorocarbons marketed under the Freon trademark, oils, including petroleum-based materials, silicon-based oils and other oils known in the art to be useful in heat transfer settings and the like; and gases, including thermostated or cooled air, nitrogen, helium or the like can also be employed, if desired. The coolant can be recirculated with thermostating or, if practical, can be fed with coolant on a one pass basis such that the coolant is discarded after one use. This latter method is generally used only with inexpensive coolant fluids such as water or air.

One feature of this invention is its ability to permit larger diameter columns to be used. Columns of up to 500 microns in diameter can be accommodated with columns of from 75 to 400 microns in diameter being preferred.

The capillary column should be of a length that is effective to achieve the desired separation of species under the electrokinetic separation conditions employed. It will be appreciated that the longer the column the greater the time a sample will take to move through the column and the greater the distance that the various species will be separated from one another. At the same time, band broadening takes place so that resolution may not be improved by adding length. These factors suggest practical limits to the capillary column length. For example, good results are achieved with column lengths as short as about 5 cm. Similarly, the transport time through a column often becomes inconveniently long for many routine analytical settings with column lengths longer than several meters.

Generally, column lengths of from about 10 cm to about 200 cm, and especially from about 40 cm to 150 cm are preferred. In each case, the length quoted is the length from the inlet reservoir to the detection point. The columns may contain additional length beyond that point as well. Of course, longer and shorter columns, for example up to 4 or 5 meters or down to about 5 cm, can be employed in combination with the cooling process of this invention. Because of their ease of construction, circular cross-section columns, i. e. "capillary tube type" columns, are preferred and the term "capillary" is used to describe the column from time to time. This is not to imply, however, that other cross-sectional shapes could not be used.

The capillary column is constructed of a material that has the properties of being durable and retaining its physical integrity at the conditions of the electrokinetic separations. These properties include compatibility with the support electrolyte; substantial nonconductivity so as to conduct negligible electricity as the electrokinetic potential is applied to it; and, being able to take on a positive or negative charge on its inner surface. The column wall should also conduct heat, preferably as well as possible, so as to permit the cooling fluid to simply remove heat from the column contents.

Inorganic materials such as quartz, glass, and fused silica and organic materials such as teflon (polytetrafluoroethylene and fluorinated ethylene/propylene polymers), polychloro-trifluoroethylene, aramide, nylon (polyamide), polyvinylchloride, polyvinylfluoride, polystyrene, polyethylene, polycarbonate, and the like may be employed.

As already pointed out, electroosmotic flow is achieved when the inner surface of the capillary column carries or binds charged species. The inner surface of the capillary column can be modified to vary its charge such as by contacting the surface with an acidic material so as to impart more positive charges, or by contacting the surface with a basic material so as to impart more negative charges or by contacting the surface with a silylating agent so as to reduce the number of charges. (See Analytical Chemistry, 53, No. 8, July 1981, 1298 for a description of the use of a trimethylsilane to reduce the charge density on the walls of a narrow channel electrophoresis zone and thus to vary the transport through the zone.) Other surface modification techniques that are know to the art may be used as well.

The voltage applied across the sample in column 30 by power supply 36 should be a voltage effective to cause discernable electrokinetic motion. Voltages below about 1000 volts are generally too low and voltages above about 100 kV are not commonly found in conventional high voltage power supplies. Based on these practical limits, voltages from about 3 kV to about 90 kV, and especially about 15 kV to about 60 or even 75 kV are preferred. It is a special feature of the present invention to permit higher voltages to be applied to the capillary column than might normally be applied since the coolant can remove the heat that the higher voltages and concomitant larger currents give rise to. The polarity of the electric potential determines the direction that the electrically charged species and charged support electrolyte move. It is generally preferred for safety reasons to have as much of the analysis system at ground potential as possible. In Figure 2, a 30 kV voltage is shown for illustration purposes. The inner surface of column 30 is such as to attract ions, for example negative ions (anions) and thus to cause formation of a diffuse double layer and in turn impart a net positive charge to the body of the support electrolyte in column 30. When the 30 kV potential is applied to the liquid in outflow container 35 by electrode 39, it can cause this positively charged liquid to be electroosmotically drawn from column 30 into container 35 and to draw additional electrolyte out of container 34 into column 30.

A typical current flow is from about 10 microamperes (microA) to about 5 milliamperes. Again, it is an advantage and property of this invention to permit the use of larger current flows than previously employed in electrokinetic separation systems of the art. Thus, currents greater than about 200 microamperes which were not favored heretofore can be simply employed.

In typical electrokinetic systems, the linear velocity of liquid through capillary 10 is about 0.2 to about 5 mm/second.

In use, a sample is injected into capillary 30. This can be accomplished by hydrostatic pressure injection of the sample onto the column or by electokinetic injection of the sample onto the column. This can be carried out by dipping the entrance end of capillary 30 into the liquid sample contained in container 58, connecting lead 40 to electrode 59 and turning on the high voltage for a short period, for example 5 to 10 seconds, at an electrokinetically effective voltage such as about 6 kV. This causes a defined 1 to 5 mm long "plug" of sample to be drawn into column 30. This sample is then subjected to the separative forces of electrokinesis by placing the entrance end in the support electrolyte in container 34, and creating the complete circuit through electrode 37 to separate the various species for detection in the detector of this invention.

EXAMPLE

This invention will be further illustrated by the following example. It is merely illustrative and is not to be construed as a limitation on the scope of the present invention.

Example 1.

The temperature controlled, capillary column separation of this invention is used to determine the concentration of the important pharmaceutical methotrexate and its major metabolite 7-hydroxymethotrexate in synthetic test samples and in serum. The results of these determinations are compared with the results obtained in other analytical methodologies known in the art.

A range of solutions of MTX or 7-OHMTX are obtained in water or deproteinized serum. The MTX or 7-OHMTX is typically oxidized as follows: An aliquot of MTX and/or 7-OHMTX standard solution or serum extract is mixed with 100 microL of 1M MES (pH = 4.00). 75 microL of 0.35% $KMnO_4$ are added and the mixture vortexed. After one minute, the excess $KMnO_4$ is reduced using 20 microL of 3% $H_2O_2$. The solution is then diluted with the buffer-electrolyte used for the electrophoresis before injection. When MTX is oxidized to 2,4-diaminopteridine-6-carboxylic acid (as depicted in Figure 3.) this provides the basis for a sensitive method of monitoring MTX because the adduct is more highly fluorescent than MTX. Maximum signal is obtained after a one minute reaction time and is used for all analyses.

Deproteination, if needed as in the case of serum samples, is carried out by conventional methods such as by treating the sample with tricholoroacetic acid (TCA), heating and centrifuging to remove precipitated proteins. Alternatively, deproteination can be carried out by column separation methods such as using a conditioned SEP-PAK $C_{18}$ cartridge (Waters Associates, Milford, MA) which will preferentioally hold up the analyte species while permitting the proteins to be washed away.

The apparatus of Figure 2 is employed. Optionally, capillaries configured as shown in Figures 3 or 4 can be substituted. In typical experiments, a 75 micon I.D. column and a 200 micron I.D. column are used. The columns have overall lengths of 100 cm of which about 75 cm is prior to the detector. The columns are cooled to 30° C and held at that temperature by cooling fluid flow. For the analysis with MTX alone in the sample, the following buffer-electrolyte is used: 5 mM MES, 5 mM TRIS, and 1 mM NaCl; the pH of the solution is adjusted to 6.7 with 1 M NaOH. A 20 kV potential gradient is used for the analysis with either the 75 micron or 200 micron capillary.

When analyzing samples containing MTX and 7-OHMTX, a buffer mixture of 5 mM MES, 16 mM $Na_2SO_4$ is prepared and the pH adjusted to 6.7 with 1 M NaOH. The solution is then made 30% v/v in MeOH. Separations are performed with an applied potential of 25 kV. Electrokinetic injection is employed. Injection of sample is effected by placing one end of the capillary in a vial containing the analyte and applying a voltage of 10 kV for a period of 5-10 seconds.

Figure 6 shows an electropherogram of MTX using the cooling step of the present invention and the electrokinetic transport conditions just outlined. Use of a lower pH gives a broader peak for MTX. Changing the buffer from MES to HEPES or TRIS also yields peaks which are broader. The calculated plate number for the peak obtained in Figure 6 is greater than 400,000. The high sensitivity of the system is due to the extremely sharp peaks obtainable with our system, the intense radiation ( $\sim$ 17 mW) provided by the laser source, and the increased path length made possible by efficient heat removal from the larger diameter capillary tubes. The detection limit based on a signal-to-noise ratio of three is $3 \times 10^{-9}$ M with the 75 micron I.D. capillary. Further enhancement of sensitivity is obtained by using a 200 micron I.D. capillary. The detection limit for MTX using the 200 micron I.D. capillary is $5 \times 10^{-10}$ M (S/N = 3). This reduction in detection limit using the larger size capillary is due to the increased volume of sample injected and the increased path length and volume of the detection cell.

When the runs in the 200 micron I.D. capillary are repeated without the use of the cooling of this invention, undesirable heating of the electrolyte in the capillary occurs which leads to peak broadening and loss of resolution as well as loss of sensitivity. The linearity of the detection system extends over nearly four orders of magnitude ($1 \times 10^{-5}$ M - $5 \times 10^{-9}$M for the 75 micron capillary. Linearity is extended at the lower end to $1 \times 10^{-9}$ M when the 200 micron capillary is used.

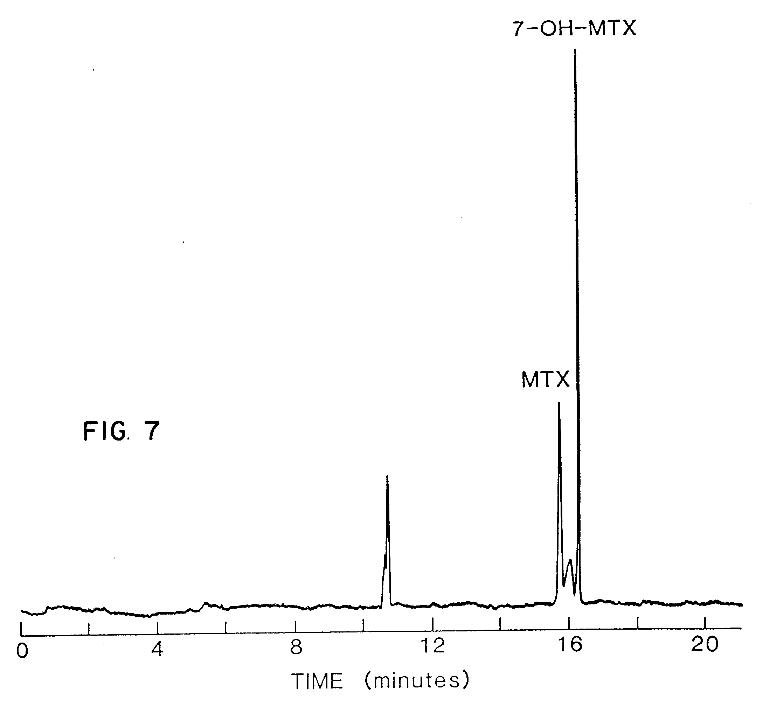

Figure 7 shows an electropherogram of the separation of a standard mixture of MTX and 7-OHMTX. Jorgensen and Lukacs [J.W. Jorgensen and K.D. Lukacs, Anal. Chem., 53 (1981) 1298-1302] have shown that the efficiency of separation in capillary zone electrophoresis is independent of length and directly proportional to the applied voltage under conditions when diffusion is the major source of peak broadening. However, we have found that by the practice of this invention and increasing the capillary length to the detector, there is an increase in the separation of the three peaks. A calibration curve constructed for 7-OHMTX extends over nearly three orders of magnitude ($1 \times 10^{-6}$ M - $5 \times 10^{-9}$ M). The peak heights for MTX and 7-OHMTX at any given concentration are reproducible to within 10%.

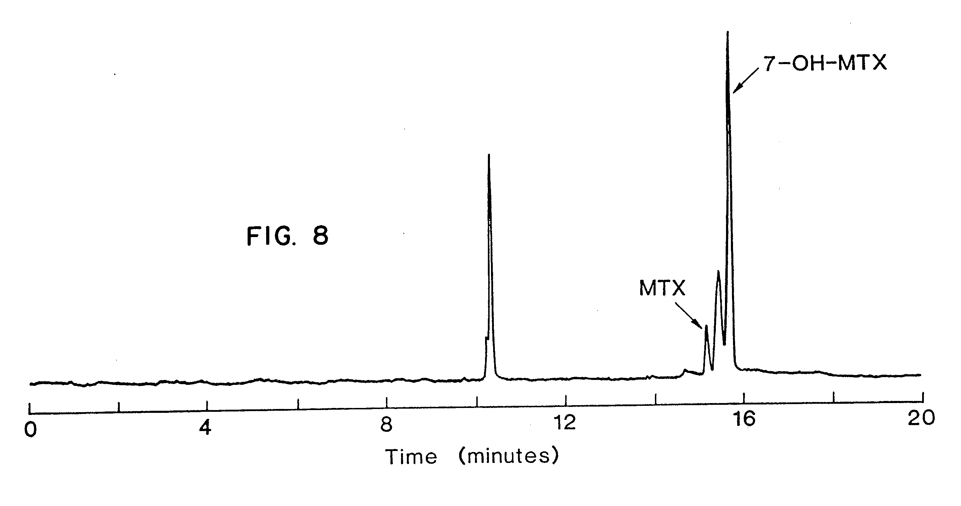

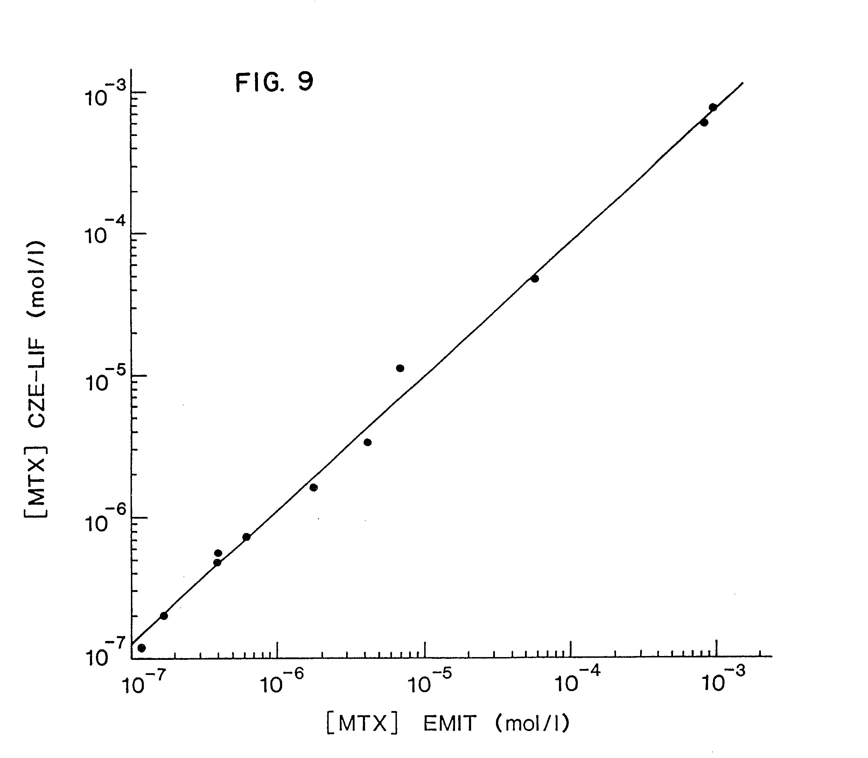

The electropherogram of a deproteinized clinical sample is shown in Figure 8. The absence of any extraneous peaks overlapping the analytes of interest shows the selectivity of the separation-detection system. The values obtained are found to correlate well with an enzyme multiplied immunoassay technique (EMIT) performed in another laboratory (double-blind study). Figure 9 shows a good correlation between the two procedures (r = 0.99) for a wide range of concentrations. In addition to the information about MTX in serum, our procedure can simultaneously provide the concentration of the major metabolite, 7-OHMTX, in serum. A comparison of the present method with an enzyme-inhibition assay procedure for another set of clinical samples shows good correlation between the two methods (r = 0.99). However, MTX concentrations are lower by as much as 50% for the CZE-LIF method. The higher value of the enzyme-inhibition assay may possibly be due to cross-reactivity of metabolites and related compounds with the enzyme.

These results show that the use of cooling during electrokinetic separation assays as provided by the present invention allows higher sensitivity in chemical analysis settings, and, for example, permits simultaneous monitoring of MTX and its major metabolite, 7-OHMTX, in serum using the separation power of capillary zone electrophoresis and the detection power of laser induced fluorescence detection. The sensitivity of our method is one to two orders of magnitude higher than existing methods, caused in part by the extremely sharp peaks characteristic of CZE and in part by the use of LIF detection. The method is quite rapid and an analysis of a clinical specimen can be accomplished in 35-40 minutes. If only MTX needs to be monitored, the analysis time can be reduced to 15-20 minutes. The rapid analysis time of the method allows for its use in pharmocokinetic studies. The system is relatively simple to use, and the capillaries are extremely inexpensive when compared to HPLC columns.

## Claims

1. A process for electrokinetic separation of species in a conductive fluid in an open ended capillary column, characterised in removing heat from the column during the separation so as to maintain the temperature at a constant level.

2. The process of claim 1 wherein the temperature is maintained at a temperature of from about 0°C to about 50°C.

3. The process of claim 2 wherein the temperature is maintained at a temperature of from about 15°C to about 35°C.

4. A separation apparatus for use in electrokinetic separations comprising a capillary column (30) in contact over a substantial fraction of its length with means (60) for removing heat from the column.

5. The separation apparatus according to claim 4 wherein the capillary column has an inside diameter of from about 75 to about 500 microns.

6. The separation apparatus of claim 5 wherein the capillary column is coiled over a substantial portion of that portion of its length from which heat is removed.

7. The process or apparatus according to any one of the preceding claims wherein the heat removal is carried out by directly contacting the column with a circulating cooling fluid.

8. The process or apparatus according to any one of claims 1-6 wherein the heat removal is carried out by indirectly contacting the column with a circulating cooling fluid.

9. The process or apparatus according to any one of the preceding claims wherein the cooling fluid is a liquid.

10. The process or apparatus according to any one of the preceding claims wherein the cooling fluid is water.

11. The process or apparatus according to any one of the preceding claims wherein the cooling fluid is a gas.

12. The process or apparatus according to claim 11 wherein the cooling fluid is air.

17.11.88

FIG. 1

FIG. 2

17·11·88

FIG. 3

FIG. 4

17.11.88

FIG. 5

FIG. 6

TIME (minutes)

FIG. 7

7-OH-MTX

MTX

TIME (minutes)

EP 0 304 295 A1

FIG. 8

7-OH-MTX

MTX

EP 0 304 295 A1

Time (minutes)

FIG. 9

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X,Y | <u>EP - A2 - 0 035 878</u> (KUREHA KAGAKU KOGYO KABUSHIKI)<br><br>* Page 4, last paragraph; page 6, second paragraph; claims * | 1-4,<br>7-10 | G 01 N 27/26<br>G 01 N 30/54 |
| D,Y | <u>US - A - 4 675 300</u> (ZARE et al.)<br><br>* Fig. 1-3; claims * | 1,5 | |

TECHNICAL FIELDS SEARCHED (Int. Cl.4)

G 01 N

The present search report has been drawn up for all claims

| Place of search | Date of completion of the search | Examiner |
|---|---|---|
| VIENNA | 24-11-1988 | TENGLER |